# EUROPÄISCHE PATENTSCHRIFT

(11) **EP 1 058 045 B1**
(45) Veröffentlichungstag und Bekanntmachung des Hinweises auf die Patenterteilung: **16.04.2008**
(21) Anmeldenummer: 00111475.0
(22) Anmeldetag: 29.05.2000
(51) Int. Cl.: F16L 47/00

(54) **Rohrleitungsverbindung**
Pipeline coupling
Raccord pour tuyaux

(30) Priorität: 29.05.1999 DE 19924825
(43) Veröffentlichungstag der Anmeldung: 06.12.2000
(73) Patentinhaber: Georg Fischer Wavin AG, 4553 Subingen (CH)
(72) Erfinder: Bloom, Oliver, 45883 Gelsenkirchen (DE); Lehmann, Ralf, 45899 Gelsenkirchen (DE)
(74) Vertreter: Weiss, Wolfgang

(56) Entgegenhaltungen:
- WO-A-97/23747
- DE-A- 4 309 941

## Beschreibung

Die Erfindung betrifft eine Rohrleitungsverbindung von Rohrleitungen für fluide Medien mit einem Anschlussgehäuse zur Herstellung eines Anschlusses an eine Leitung, wobei im Anschlussgehäuse eine erste Rohrleitung mit einem Rohrleitungsende aus Metall angeordnet ist, wobei eine an das Rohrleitungsende angeschlossene Kunststoffrohrleitung bzw. ein angeschlossener Anschlussstutzen aus Kunststoff angeordnet ist,

Fluide Medien meint Flüssigkeiten, insbesondere Wasser, und Gase. Die Erfindung bezieht sich insbesondere auf eine Rohrleitungsverbindung von Rohrleitungen, in denen die fluiden Medien mit relativ hohem Druck geführt werden. Das Rohrleitungsende der ersten Rohrleitung besteht nach einer bevorzugten Ausführungsform der Erfindung aus einem Metall oder einer Metallegierung. Es liegt jedoch auch im Rahmen der Erfindung, daß das Rohrleitungsende aus einem Kunststoff besteht. Die Kunststoffrohrleitung besteht zweckmäßigerweise aus einem thermoplastischen Kunststoff. Es liegt im Rahmen der Erfindung, daß die Rohrleitung bzw. das Rohrleitungsende und die Kunststoffrohrleitung jeweils einen kreisförmigen Querschnitt aufweisen.

Aus der Praxis ist insbesondere eine Rohrleitungsverbindung der eingangs genannten Art bekannt, bei der das Rohrleitungsende Bestandteil eines Anschlußgehäuses einer Anschlußvorrichtung ist, die zur Herstellung eines Anschlusses an eine Hauptleitung für fluide Medien dient. Die Kunststoffrohrleitung ist als Abzweigstutzen an dem Anschlußgehäuse angeschlossen. Das Rohrleitungsende und das damit in Verbindung stehende Innere des Anschlußgehäuses bestehen aus Metall. Es ist erforderlich, eine feste und abdichtende Verbindung zwischen der Kunststoffrohrleitung einerseits und dem metallischen Rohrleitungsende andererseits herzustellen. Dadurch soll vermieden werden, daß aufgrund einer inneren Druckbeaufschlagung durch das fluide Medium die Kunststoffumhüllung von dem metallischen Rohrleitungsende gelöst wird. Dies hätte Undichtigkeiten zur Folge und im übrigen kann es nach dem Ablösen auch zu einer vollständigen Zerstörung der Kunststoffumhüllung kommen. In diesem Zusammenhang ist es aus der Praxis einerseits bekannt, die Kunststoffrohrleitung bzw. die Kunststoffumhüllung im Bereich des Rohrleitungsendes in Abhängigkeit von den zu erwartenden Innendrücken zu verstärken bzw. dickwandiger auszuführen. Dies erfordert jedoch in nachteilhafter Weise einen höheren Materialeinsatz und es entstehen unerwünscht voluminöse Aggregate. Andererseits ist es aus der Praxis bekannt, zwischen der Kunststoffrohrleitung und dem Rohrleitungsende Klemmverbindungen und/oder Dichtungen, wie z.B. O-Ringe, vorzusehen. Es ist auch bekannt, Nuten im Rohrleitungsende vorzusehen, in die der Kunststoff der Kunststoffrohrleitung zum Zwecke der Herstellung einer festen Verbindung eingreift. Diese letztgenannten bekannten Maßnahmen sind in fertigungstechnischer bzw. montagetechnischer Hinsicht sowie im Hinblick auf den Materialeinsatz nachteilhaft aufwendig.

Aus der DE 43 09 941 A1 ist eine Rohranbohrarmatur gemäß dem Oberbegriff von Anspruch 1 bekannt, bei der eine Metallhülse aus Metall in einem Gehäuse aus Kunststoff eingesetzt ist. Auf der äusseren Oberfläche der Metallhülse sind einzelne abstehende rotationssymmetrische Vorsprünge mit einem T-förmigen Querschnitt ausgebildet. Mit diesen Vorsprüngen wird die Metallhülse verdrehsicher in dem Gehäuse aus Kunststoff gehalten.

Demgegenüber liegt der Erfindung das technische Problem zugrunde, eine Rohrleitungsverbindung der eingangs genannten Art anzugeben, die auch bei hohen Innendrücken eine feste Verbindung zwischen dem Rohrleitungsende und der Kunststoffrohrleitung gewährleistet und nichtsdestoweniger auf wenig aufwendige Weise realisiert werden kann und bei der die vorgenannten Nachteile vermieden werden können.

Zur Lösung dieses technischen Problems lehrt die Erfindung eine Rohrleitungsverbindung von Rohrleitungen für fluide Medien, - mit Zur Lösung dieses technischen Problems lehrt die Erfindung eine Rohrleitungsverbindung von Rohrleitungen für fluide Medien, - mit
einer ersten Rohrleitung mit einem Rohrleitungsende und einer an das Rohrleitungsende angeschlossenen Kunststoffrohrleitung,
wobei eine im Bereich der Stirnkante des Rohrleitungsendes angeordnete Anschlußprofilierung vorgesehen ist, welche Anschlußprofilierung über den Umfang des Rohrleitungsendes umlaufend und aus dem Rohrleitungsende in radialer Richtung herausragend ausgebildet ist,
wobei die Anschlußprofilierung von dem Kunststoff der Kunststoffrohrleitung vollständig umspritzt ist
und wobei die Anschlußprofilierung zumindest eine Schenkelkomponente aufweist, die den eingespritzten Kunststoff überfaßt.

Nach bevorzugter Ausführungsform der Erfindung besteht das Rohrleitungsende der ersten Rohrleitung aus Metall, vorzugsweise aus Messing. Es versteht sich, daß auch die Anschlußprofilierung aus dem Metall, vorzugsweise Messing, besteht. Zweckmäßigerweise besteht die gesamte erste Rohrleitung aus dem Metall. Grundsätzlich liegt es auch im Rahmen der Erfindung, daß das Rohrleitungsende bzw. die Rohrleitung aus einem Kunststoff besteht. Dabei handelt es sich zweckmäßigerweise um einen Kunststoff mit höherem Schmelzpunkt im Vergleich zu dem Kunststoff der Kunststoffrohrleitung. - Nach bevorzugter Ausführungsform der Erfindung besteht die Kunststoffrohrleitung aus einem Polyalken, vorzugsweise aus Polyethylen, sehr bevorzugt aus Hochdruck-Polyethylen (HD-PE). - Es liegt im Rahmen der Erfindung, daß der Werkstoff, aus dem das Rohrleitungsende bzw. die Rohrleitung besteht, einen höheren Schmelzpunkt aufweist als der Kunststoff, aus dem die Kunststoffrohrleitung besteht.

Erfindungsgemäß ist die Anschlußprofilierung im Bereich der Stirnkante des Rohrleitungsendes angeordnet. "Im Bereich der Stirnkante" meint im Rahmen der Erfindung, daß die Anschlußprofilierung in bezug auf die Längsrichtung des Rohrleitungsendes bzw. die Längsrichtung der Kunststoffrohrleitung nur mit geringem Abstand von der in der Regel kreisförmig über dem Umfang des Rohrleitungsendes umlaufenden Stirnkante angeordnet ist. Dabei ist der Abstand zu der Stirnkante vorzugsweise geringer als die maximale Ausdehnung bzw. als die maximale Breite der Anschlußprofilierung in bezug auf die Längsrichtung des Rohrleitungsendes bzw. in bezug auf die Längsrichtung der Kunststoffrohrleitung. - Erfindungsgemäß ist die Anschlußprofilierung über den Umfang des Rohrleitungsendes umlaufend ausgebildet. Dabei liegt es jedoch auch im Rahmen der Erfindung, daß einzelne Unterbrechungen in der in der Regel kreisförmig umlaufenden Anschlußprofilierung vorgesehen sind. Vorzugsweise ist jedoch die Anschlußprofilierung ohne Unterbrechungen über den Umfang des Rohrleitungsendes umlaufend ausgeführt.

Nach bevorzugter Ausführungsform der Erfindung ist die Anschlußprofilierung über den Außenumfang des Rohrleitungsendes umlaufend ausgebildet. Grundsätzlich liegt es auch im Rahmen der Erfindung, daß die Anschlußprofilierung am Innenumfang des Rohrleitungsendes umläuft. Bei dieser Ausführungsform ist das Rohrleitungsende bzw. das metallische Rohrleitungsende außen und der Kunststoff der Kunststoffrohrleitung im Inneren des Rohrleitungsendes angeordnet. - Daß die Anschlußprofilierung erfindungsgemäß aus dem Rohrleitungsende in radialer Richtung herausragt, meint mit anderen Worten, daß eine über den Umfang des Rohrleitungsendes umlaufende heraustretende Profilierungsnase vorgesehen ist. Daß die Anschlußprofilierung aus dem Rohrleitungsende in radialer Richtung herausragt, meint insbesondere, daß diese Anschlußprofilierung gegenüber den unmittelbar angrenzenden Rohrleitungsmantelabschnitten aus dem Rohrleitungsende radial herausragt. - Wenngleich im Patentanspruch 1 die Rede von einer Anschlußprofilierung ist, liegt es auch im Rahmen der Erfindung, daß bezüglich der Längsrichtung des Rohrleitungsendes bzw. bezüglich der Längsrichtung der Kunststoffrohrleitung eine Mehrzahl von umlaufenden Anschlußprofilierungen hintereinander an dem Rohrleitungsende angeordnet ist. - Nach einer Ausführungsform der Erfindung kann fernerhin an der von der Stirnkante abgewandten Seite angrenzend an die Anschlußprofilierung eine radial umlaufende Nut in dem Rohrleitungsende vorgesehen sein.

Erfindungsgemäß wird die Anschlußprofilierung mit dem Kunststoff der Kunststoffrohrleitung vollständig umspritzt. Es liegt im Rahmen der Erfindung, daß die Anschlußprofilierung mittels eines Spritzgießverfahrens mit plastifiziertem Kunststoff, vorzugsweise Polyethylen, vollständig umspritzt wird. Dem Spritzgießverfahren kommt erfindungsgemäß besondere Bedeutung zu, da bei der auf diese Weise hergestellten Rohrleitungsverbindung das oben dargelegte technische Problem überraschend effektiv gelöst wird. Insoweit betrifft die Erfindung auch ein Verfahren zur Herstellung einer Rohrleitungsverbindung, bei dem die Anschlußprofilierung an dem Rohrleitungsende durch Spritzgießen mit Kunststoff vollständig umspritzt wird. Vorzugsweise wird dabei plastifizierter Kunststoff, bevorzugt mit einer Temperatur von etwa 200 bis 230 °C, zweckmäßigerweise unter hohem Druck von etwa 500 bis 1000 bar, in eine Form um das Rohrleitungsende homogen eingespritzt. Nach dem Einspritzen findet eine Abkühlung und Schrumpfung der Kunststoffumhüllung statt und es wird eine überraschend effektive und feste Verklammerung mit der Anschlußprofilierung an dem Rohrleitungsende erzielt. Zugleich resultiert eine optimal dichte Rohrleitungsverbindung. Durch die erfindungsgemäße Auslegung der Anschlußprofilierung wird insbesondere erreicht, daß bei hohem Innendruck bzw. bei innerer Beaufschlagung durch den Druck des fluiden Mediums die Dichtwirkung dadurch überraschend stark erhöht wird, daß Kunststoffsegmente an die Anschlußprofilierung gleichsam angepreßt werden. Insoweit zeichnet sich die erfindungsgemäße Rohrleitungsverbindung durch eine "selbstdichtende Funktion" aus. Diese wird insbesondere dadurch gewährleistet, daß erfindungsgemäß die Anschlußprofilierung zumindest eine Schenkelkomponente aufweist, die eingespritzten Kunststoff überfaßt. Vorzugsweise ist diese Schenkelkomponente parallel oder zumindest im wesentlichen parallel zur Längsrichtung der Kunststoffrohrleitung angeordnet. Zweckmäßigerweise ist die Schenkelkomponente über den Umfang des Rohrleitungsendes umlaufend ausgebildet.

Nach sehr bevorzugter Ausführungsform, der im Rahmen der Erfindung ganz besondere Bedeutung zukommt, ist die den eingespritzten Kunststoff überfassende Schenkelkomponente zur Kunststoffrohrleitung hin ausgerichtet. Mit anderen Worten hat bei dieser Ausführungsform die Anschlußprofilierung eine über den Umfang des Rohrleitungsendes umlaufende Nase, die in Richtung Kunststoffrohrleitung zeigt. Diese Anschlußprofilierung gewährleistet eine besonders effektive Verbindung zwischen Rohrleitungsende und Kunststoffrohrleitung sowie eine sehr funktionssichere Abdichtung zwischen beiden Bauteilen. Nach weiterhin bevorzugter Ausführungsform der Erfindung überragt zumindest ein Teil der Schenkelkomponente die Stirnkante des Rohrleitungsendes.

Nach einer weiteren Ausführungsform der Erfindung weist die Anschlußprofilierung zwei gegenüberliegende Schenkelkomponenten auf, die den eingespritzten Kunststoff überfassen. Vorzugsweise sind die beiden Schenkelkomponenten bezüglich ihrer Größe und Form gleichartig ausgebildet. Zweckmäßigerweise sind beide gegenüberliegende Schenkelkomponenten über den Umfang des Rohrleitungsendes umlaufend ausgebildet. Dabei ist eine Ausführungsform dadurch gekennzeichnet, daß die Anschlußprofilierung im Querschnitt T-förmig ausgeführt ist. Die Anschlußprofilierung kann auch im Querschnitt trapezförmig ausgebildet sein. - Es liegt im Rahmen der Erfindung, daß zumindest eine Schenkelkomponente hakenförmig ausgebildet ist. Die Schenkelkomponente kann einen entsprechenden Hinterschnitt aufweisen. Mit diesen genannten Ausführungsformen wird eine besonders effektive Verklammerung des Rohrleitungsendes mit der Kunststoffrohrleitung erzielt.

Mit der zumindest einen erfindungsgemäßen Schenkelkomponente wird eine besonders effektive Dichtwirkung erreicht. Wie bereits oben dargelegt, wird bei erhöhtem Innendruck Kunststoffmaterial der Kunststoffrohrleitung gegen die Schenkelkomponente gedrückt und dadurch wird eine selbstdichtende Funktion der Rohrleitungsverbindung erreicht. - Eine besonders überraschende Dichtwirkung und eine sehr effektive Verklammerung wird insbesondere dann erreicht, wenn das fluide Medium von der ersten Rohrleitung in die Kunststoffrohrleitung strömt.

Nach sehr bevorzugter Ausführungsform, der im Rahmen der Erfindung ganz besondere Bedeutung zukommt, ist das Rohrleitungsende Bestandteil eines Anschlußgehäuses einer Anschlußvorrichtung zur Herstellung eines Anschlusses an eine Leitung für fluide Medien und ist die Kunststoffrohrleitung als Abzweigstutzen an dem Anschlußgehäuse angeschlossen. Insbesondere bei einer solchen Vorrichtung bringt die erfindungsgemäße Rohrleitungsverbindung ganz überraschende Vorteile im Hinblick auf eine effektive feste Verbindung und im Hinblick auf eine funktionssichere Abdichtung zwischen Kunststoffrohrleitung und Rohrleitungsende. Zweckmäßigerweise besteht das innere Anschlußgehäuse aus Metall und ist dieses metallische Anschlußgehäuse mit Kunststoff umspritzt. Es versteht sich, daß das Anschlußgehäuse in an sich bekannter Weise eine Betätigungsspindel, einen Ventilkörper und zumindest ein Anschlußwerkzeug zur Herstellung eines Anschlusses an die Leitung aufweisen kann. Die als Abzweigstutzen ausgebildete Kunststoffrohrleitung ist zweckmäßigerweise senkrecht zum Anschlußgehäuse angeordnet.

Der Erfindung liegt die Erkenntnis zugrunde, daß das oben dargelegte technische Problem auf einfache und effektive Weise gelöst werden kann, wenn die Merkmalskombination nach Patentanspruch 1 verwirklicht wird. Bei im Vergleich zu den eingangs erläuterten bekannten Rohrleitungsverbindungen gleichbleibenden Wandstärken, können wesentlich höhere Berstdrücke bzw. Innendrücke des fluiden Mediums aufgebracht werden, ohne daß die Funktionssicherheit der Rohrleitungsverbindung beeinträchtigt wird. Insoweit ist beispielsweise eine Drucksteigerung von 40 bar auf 80 bar möglich. Mit anderen Worten wird im Vergleich zu den bekannten Maßnahmen eine gewünschte Zeitstandfestigkeit mit geringeren Wandstärken bzw. Kunststoffumhüllungsstärken erreicht. Durch die erfindungsgemäßen Merkmale wird eine überraschend starke Verklammerung zwischen dem Rohrleitungsende und der Kunststoffrohrleitung erzielt. Dies gilt insbesondere, wenn das Rohrleitungsende aus Metall besteht. Aufwendige Dichtungsbauteile, Klemmverbindungen oder Materialverstärkungen sind hierfür nicht erforderlich. Die überraschend feste Verbindung und überraschend funktionssichere Abdichtung zwischen den Bauteilen wird mit relativ geringem Materialaufwand erreicht und ist ohne aufwendige Fertigungs- und Montagemaßnahmen möglich. Wesentlich für den erfindungsgemäßen Erfolg ist u.a. die vollständige Umspritzung der Anschlußprofilierung mit Kunststoff und auch die vollständige Umspritzung der Schenkelkomponente bzw. der Schenkelkomponenten mit dem Kunststoff. Auf diese Weise wird erfindungsgemäß eine automatische Abdichtwirkung bzw. die oben bereits erläuterte selbstdichtende Funktion erreicht. Besonders ausgeprägt sind die vorstehend erläuterten Vorteile bei einer Rohrleitungsverbindung an einer Anschlußvorrichtung gemäß Patentanspruch 8.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch eine Anschlußvorrichtung mit einer erfindungsgemäßen Rohrleitungsverbindung,
- Fig. 2: den Ausschnitt A aus Fig. 1 in vergrößertem Maßstab,
- Fig. 3: eine andere Querschnittsform einer erfindungsgemäßen Anschlußprofilierung,
- Fig. 4: den Gegenstand nach Fig. 3 in einer weiteren Ausführungsform,
- Fig. 5: den Gegenstand gemäß Fig. 3 in einer zusätzlichen abgewandelten Ausführungsform,
- Fig. 6: einen weiteren Querschnitt einer Anschlußprofilierung,
- Fig. 7: den Gegenstand nach Fig. 6 in einer abgewandelten Ausführungsform, und
- Fig. 8: eine besondere bevorzugte Ausführungsform des Gegenstandes gemäß Fig. 2.

Die Figuren zeigen eine Rohrleitungsverbindung von Rohrleitungen für fluide Medien mit einer ersten Rohrleitung 1 mit einem Rohrleitungsende 2 und einer an das Rohrleitungsende 2 angeschlossenen Kunststoffrohrleitung 3.

Nach bevorzugter Ausführungsform der Erfindung und im Ausführungsbeispiel nach den Figuren ist das Rohrleitungsende 2 Bestandteil eines Anschlußgehäuses 4 einer Anschlußvorrichtung zur Herstellung eines Anschlusses an eine Leitung 5 für fluide Medien. Die Kunststoffrohrleitung 3 ist dabei als Abzweigstutzen an dem Anschlußgehäuse 4 angeschlossen und im Ausführungsbeispiel senkrecht zur Längsrichtung des Anschlußgehäuses 4 angeordnet. Der untere Teil des Anschlußgehäuses 4 bildet gleichsam die erste Rohrleitung 1, deren Rohrleitungsende 2 senkrecht zur Längsrichtung der Rohrleitung 1 angeordnet ist. Das Anschlußgehäuse 4 bzw. die Rohrleitung 1 und das Rohrleitungsende 2 bestehen zweckmäßigerweise und im Ausführungsbeispiel aus Metall, vorzugsweise aus Messing. Das Anschlußgehäuse 4 ist im Ausführungsbeispiel vollständig mit einem Kunststoffmantel 6 umspritzt. Vorzugsweise besteht der Kunststoffmantel 6 aus dem gleichen Kunststoff wie die als Abzweigstutzen ausgebildete Kunststoffrohrleitung 3. Die Anschlußvorrichtung wird an der Wandung der Leitung 5 befestigt. Diese Wandung besteht in der Regel aus einem Kunststoff. In dem Anschlußgehäuse 4 befindet sich üblicherweise ein Anschlußwerkzeug 7, welches in dem Anschlußgehäuse 4 verschiebbar ist und mit dem in der Wandung der Leitung 5 eine Anschlußöffnung 8 einbringbar ist. Es liegt dabei im Rahmen der Erfindung, daß ein der Anschlußöffnung 8 im wesentlichen entsprechendes Wandungssegment mit Hilfe des Anschlußwerkzeuges 7 entfernt wird. Auf die beschriebene Weise wird somit eine Verbindung zwischen der Leitung 5, die beispielsweise eine Trinkwasserleitung ist, und dem Rohrleitungsende 2 bzw. der Kunststoffrohrleitung 3 hergestellt. Die Kunststoffrohrleitung 3 mag zum Beispiel zu einem mit Trinkwasser zu versorgenden Haushalt führen. - Die erfindungsgemäße Rohrleitungsverbindung hat sich ganz besonders im Rahmen einer solchen Ausführungsform an einer Anschlußvorrichtung bewährt. Speziell in dieser Ausführungsform wird eine überraschend feste Verbindung zwischen Rohrleitungsende und Kunststoffrohrleitung sowie eine überraschend funktionssichere Abdichtung erzielt.

Bei der erfindungsgemäßen Rohrleitungsverbindung ist eine an der Stirnkante 9 des Rohrleitungsendes 2 angeordnete Anschlußprofilierung 10 vorgesehen. Im Ausführungsbeispiel besteht die Anschlußprofilierung 10 wie das Rohrleitungsende 2 und das Anschlußgehäuse 4 aus einem Metall, nämlich aus Messing. Die Anschlußprofilierung 10 ist hier über den Außenumfang des Rohrleitungsendes 2 umlaufend ausgebildet. Daß die Anschlußprofilierung 10 im Bereich der in der Regel kreisförmig ausgebildeten Stirnkante 9 angeordnet ist, meint im Rahmen der Erfindung, daß diese Anschlußprofilierung 10 lediglich mit geringem Abstand von der Stirnkante 9 angeordnet ist. Der in Axialrichtung bzw. Längsrichtung der Kunststoffrohrleitung 3 bzw. des Rohrleitungsendes 2 gemessene Abstand a der Anschlußprofilierung 10 von der Stirnkante 9 ist bevorzugt kleiner als die maximale Ausdehnung b der Anschlußprofilierung 10 in der genannten Richtung. Nach einer Ausführungsform der Erfindung ist der Abstand a kleiner als die Hälfte der maximalen Ausdehnung b. In den Figuren ist erkennbar, daß die Anschlußprofilierung 10 aus dem Rohrleitungsende 2 in radialer Richtung herausragt. Damit ist gemeint, daß die Anschlußprofilierung 10 im Vergleich zu den benachbarten Mantelabschnitten des Rohrleitungsendes 2 in radialer Richtung absteht.

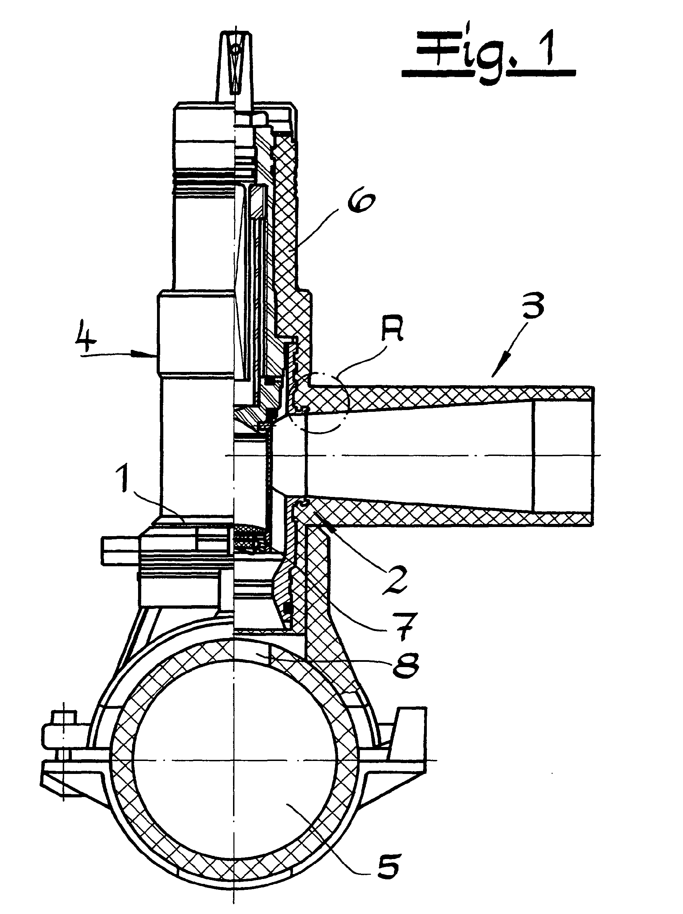

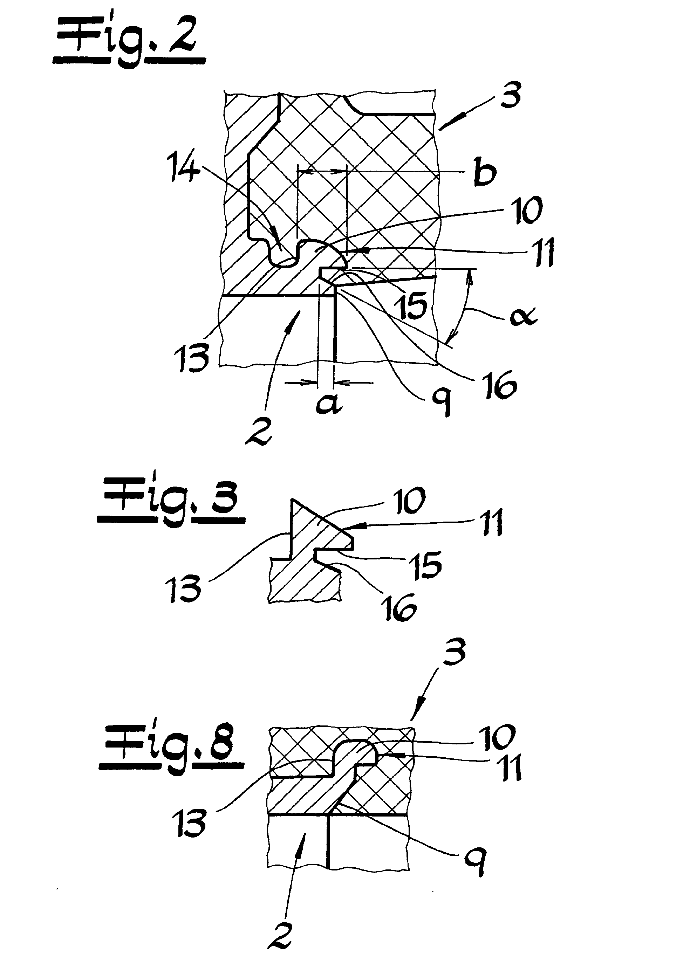

Nach sehr bevorzugter Ausführungsform und im Ausführungsbeispiel nach den Fig. 1 bis 3 weist die Anschlußprofilierung 10 nur eine Schenkelkomponente 11 auf, die eingespritzten Kunststoff der Kunststoffrohrleitung 3 überfaßt. Dabei ist diese Schenkelkomponente 11 zur Kunststoffrohrleitung 3 bzw. zum Abzweigstutzen hin ausgerichtet. Im Ausführungsbeispiel nach den Fig. 1 bis 3 ist die den Kunststoff überfassende Unterseite 15 der Schenkelkomponente 11 parallel oder im wesentlichen parallel zur Axialrichtung bzw. Längsrichtung der Kunststoffrohrleitung 3 ausgerichtet. Nach sehr bevorzugter Ausführungsform und im Ausführungsbeispiel nach den Fig. 1 bis 3 überragt ein Teil der Schenkelkomponente 11 die Stirnkante 9 des Rohrleitungsendes 2. Vorzugsweise ist die der Schenkelkomponente 11 gegenüberliegende Fläche 13, die in bezug auf den gesamten Umfang des Rohrleitungsendes 2 als ringförmige Fläche 13 ausgebildet ist, senkrecht oder im wesentlichen senkrecht zur Axialrichtung bzw. Längsrichtung des Rohrleitungsendes 2 bzw. der Kunststoffrohrleitung 3 angeordnet. Nach bevorzugter Ausführungsform der Erfindung und im Ausführungsbeispiel nach den Fig. 1 und 2 schließt im übrigen an der von der Stirnkante 9 abgewandten Seite der Anschlußprofilierung 10 eine in dem Rohrleitungsende 2 radial umlaufende Nut 14 an.

Erfindungsgemäß wird die Anschlußprofilierung 10 und ihre Schenkelkomponente 11 vollständig von dem Kunststoff der Kunststoffrohrleitung im Rahmen eines Spritzgießverfahrens umspritzt. Beim Abkühlen schrumpft der eingespritzte Kunststoff gleichsam in die Profilierungen, beispielsweise auch in die insbesondere in Fig. 2 dargestellte Nut 14, ein und dadurch ergibt sich eine effektive Verklammerung des Kunststoffes mit dem Rohrleitungsende 2. Auf diese Weise wird die erfindungsgemäß überraschende feste Verbindung und besonders funktionssichere Abdichtung zwischen Rohrleitungsende 2 und Kunststoffrohrleitung 3 erreicht.

Insbesondere in den Fig. 2 und 3 ist erkennbar, daß die Unterseite 15 der Schenkelkomponente 11 vorzugsweise parallel zur Axialrichtung bzw. Längsrichtung des Rohrleitungsendes 2 bzw. der Kunststoffrohrleitung 3 angeordnet ist. Gegenüber dieser Unterseite 15 und vor der Stirnkante 9 ist an dem Rohrleitungsende 2 bevorzugt eine abgeschrägte Fläche 16 ausgebildet. Der Winkel α zwischen der Unterseite 15 und der abgeschrägten Fläche 16 beträgt zweckmäßigerweise 15 bis 35°, sehr bevorzugt 20 bis 30°. Im Ausführungsbeispiel beträgt dieser Winkel α 25°.

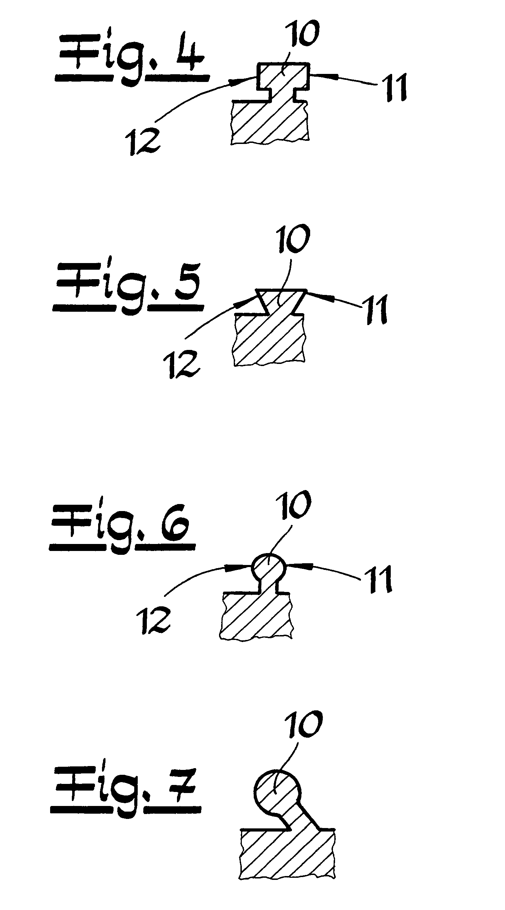

Nach einer anderen Ausführungsform der Erfindung weist die Anschlußprofilierung 10 zwei gegenüberliegende Schenkelkomponenten 11, 12 auf, die eingespritzten Kunststoff überfassen. Diese Ausführungsform wird in den Fig. 4 bis 6 dargestellt. In der Fig. 4 ist die Anschlußprofilierung 10 im Querschnitt T-förmig ausgebildet und in der Ausführungsform der Fig. 5 ist die Anschlußprofilierung 10 im Querschnitt trapezförmig ausgeführt. Die Ausführungsform gemäß Fig. 6 zeigt eine oben wulstförmig verdickte Anschlußprofilierung 10, wobei aufgrund dieser Verdickung zwei gegenüberliegende Schenkelkomponenten 11, 12 ausgebildet werden. In der Ausführungsform nach Fig. 7 ist eine Anschlußprofilierung 10 vorgesehen, die in etwa die Form der Anschlußprofilierung 10 gemäß Fig. 6 aufweist. Diese Anschlußprofilierung 10 ist jedoch schräg zur Längsachse bzw. zur Längsrichtung der Kunststoffrohrleitung 3 bzw. des Rohrleitungsendes 2 angeordnet. Hierdurch wird erreicht, daß die gesamte Anschlußprofilierung 10 eingespritzten Kunststoff überfaßt.

Eine weiterhin bevorzugte Ausführungsform der Erfindung ist in Fig. 8 dargestellt. Die Form der Anschlußprofilierung 10 entspricht hier in etwa der Form der Anschlußprofilierung 10 nach den Fig. 1 und 2. In der Fig. 8 überragt die Anschlußprofilierung 10 jedoch die Stirnkante 9 vollständig. Auch bei dieser Ausführungsform wird eine sehr effektive Verklammerung zwischen Rohrleitungsende 2 und Kunststoffrohrleitung 3 erzielt.

## Patentansprüche

1. Rohrleitungsverbindung von Rohrleitungen für fluide Medien mit einem Anschlussgehäuse (4) zur Herstellung eines Anschlusses an eine Leitung (5), wobei im Anschlussgehäuse (4) eine erste Rohrleitung (1) mit einem Rohrleitungsende (2) aus Metall angeordnet ist, wobei eine an das Rohrleitungsende (2) angeschlossene Kunststoffrohrleitung (3) bzw. ein angeschlossener Anschlussstutzen aus Kunststoff angeordnet ist,
**dadurch gekennzeichnet,**
**dass** das Rohrleitungsende (2) aus Metall senkrecht zur Längsrichtung des Anschlussgehäuses (4) und in der Längsrichtung des Anschlussstutzens (3) angeordnet ist,
**dass** eine im Bereich der Stirnkante (9) des Rohrleitungsendes (2) angeordnete Anschlussprofilierung (10) vorgesehen ist,
und **dass** die Anschlussprofilierung (10) umlaufend über den Umfang des Rohrleitungsendes (2) und in radialer Richtung herausragend aus dem Rohrleitungsende (2) aus Metall ausgebildet ist,
wobei die Anschlussprofilierung (10) von dem Kunststoff der Kunststoffrohrleitung (3) vollständig umspritzt ist,
und wobei die Anschlussprofilierung (10) zumindest eine Schenkelkomponente (11, 12) aufweist, die eingespritzten Kunststoff überfasst.

2. Rohrleitungsverbindung nach Anspruch 1, wobei das Rohrleitungsende (2) der ersten Rohrleitung (1) aus Metall besteht.

3. Rohrleitungsverbindung nach einem der Ansprüche 1 oder 2, wobei die Kunststoffrohrleitung (3) aus Polyethylen besteht.

4. Rohrleitungsverbindung nach einem der Ansprüche 1 bis 3, wobei die Anschlußprofilierung (10) über den Außenumfang des Rohrleitungsendes (2) umlaufend ausgebildet ist.

5. Rohrleitungsverbindung nach einem der Ansprüche 1 bis 4, wobei die den eingespritzten Kunststoff überfassende Schenkelkomponente (11) zur Seite der Kunststoffrohrleitung (3) hin ausgerichtet ist.

6. Rohrleitungsverbindung nach Anspruch 5, wobei die Schenkelkomponente (11) die Stirnkante (9) des Rohrleitungsendes (2) überragt.

7. Rohrleitungsverbindung nach einem der Ansprüche 1 bis 6, wobei die Anschlußprofilierung (10) zwei gegenüberliegende Schenkelkomponenten (11, 12) aufweist, die eingespritzten Kunststoff überfassen.

8. Rohrleitungsverbindung nach einem der Ansprüche 1 bis 7, wobei das Rohrleitungsende (2) Bestandteil eines Anschlußgehäuses (4) einer Anschlußvorrichtung zur Herstellung eines Anschlusses an eine Leitung (5) für fluide Medien ist und wobei die Kunststoffrohrleitung (3) als Abzweigstutzen an dem Anschlußgehäuse (4) angeschlossen ist.

## Claims

1. Pipeline joint for connecting pipelines for fluid media to a connecting housing (4) for establishing a connection to a line (5), wherein in the connecting housing (4) there is disposed a first pipeline (1) having a metal pipeline end (2), a plastics pipeline (3), connected to the pipeline end (2), or a connected plastics connecting branch being provided,
**characterized in that**
the metal pipeline end (2) is disposed perpendicular to the longitudinal direction of the connecting housing (4) and in the longitudinal direction of the connecting branch (3),
**in that** a connecting profile (10) disposed in the region of the front edge (9) of the pipeline end (2) is provided,
and **in that** the connecting profile (10) is configured such that it skirts the periphery of the pipeline end (2) and projects in the radial direction from the metal pipeline end (2),
the connecting profile (10) being fully encased by the plastic of the plastics pipeline (3),
and the connecting profile (10) having at least one side piece component (11, 12), which engages over injected plastic.

2. Pipeline joint according to Claim 1, wherein the pipeline end (2) of the first pipeline (1) consists of metal.

3. Pipeline joint according to one of Claims 1 or 2, wherein the plastics pipeline (3) consists of polyethylene.

4. Pipeline joint according to one of Claims 1 to 3, wherein the connecting profile (10) is configured such that it skirts the outer periphery of the pipeline end (2).

5. Pipeline joint according to one of Claims 1 to 4, wherein the side piece component (11) engaging over the injected plastic is aligned in the direction of the side of the plastics pipeline (3).

6. Pipeline joint according to Claim 5, wherein the side piece component (11) projects over the front edge (9) of the pipeline end (2).

7. Pipeline joint according to one of Claims 1 to 6, wherein the connecting profile (10) has two mutually opposing side piece components (11, 12), which engage over injected plastic.

8. Pipeline joint according to one of Claims 1 to 7, wherein the pipeline end (2) is a constituent part of a connecting housing (4) of a connecting apparatus for establishing a connection to a line (5) for fluid media, and wherein the plastics pipeline (3) is connected as a branch pipe to the connecting housing (4).

## Revendications

1. Raccord pour conduits tubulaires destinés à des milieux fluides, qui présente un boîtier de raccordement (4) qui permet d'établir un raccordement à un conduit (5), un premier conduit tubulaire (1) dont l'extrémité (2) est réalisée en métal étant disposé dans le boîtier de raccordement (4), un conduit tubulaire (3) en matière synthétique et une tubulure de raccordement en matière synthétique étant raccordée (2) du conduit tubulaire,
**caractérisé en ce que**
l'extrémité (2) en métal du conduit tubulaire est disposée perpendiculairement au sens de la longueur du boîtier de raccordement (4) et dans le sens de la longueur de la tubulure de raccordement (3),
**en ce qu'**un profil de raccordement (10) est prévu dans la zone du bord frontal (9) de l'extrémité (2) du conduit tubulaire et
**en ce que** le profil de raccordement (10) est formé autour de la périphérie de l'extrémité (2) du conduit tubulaire et déborde du conduit tubulaire dans la direction radiale de l'extrémité (2) en métal,
le profil de raccordement (10) étant entièrement englobé dans la matière synthétique du conduit tubulaire (3) en matière synthétique et
le profil de raccordement (10) présentant au moins un composant d'aile (11, 12) qui recouvre la matière synthétique injectée.

2. Raccord pour conduits tubulaires selon la revendication 1, dans lequel l'extrémité (2) du premier conduit tubulaire (1) est réalisée en métal.

3. Raccord pour conduits tubulaires selon l'une des revendications 1 ou 2, dans lequel le conduit tubulaire (3) en matière synthétique est constitué de polyéthylène.

4. Raccord pour conduits tubulaires selon l'une des revendications 1 à 3, dans lequel le profil de raccordement (10) est formé au-dessus de la périphérie extérieure de l'extrémité (2) du conduit tubulaire.

5. Raccord pour conduits tubulaires selon l'une des revendications 1 à 4, dans lequel le composant d'aile (11) qui surmonte la matière synthétique injectée est orienté vers le côté du conduit tubulaire (3) en matière synthétique.

6. Raccord pour conduits tubulaires selon la revendication 5, dans lequel le composant d'aile (11) déborde du côté frontal (9) de l'extrémité (2) du conduit tubulaire.

7. Raccord pour conduits tubulaires selon l'une des revendications 1 à 6, dans lequel le profil de raccordement (10) présente deux composants d'aile (11, 12) opposés l'un à l'autre qui recouvrent la matière synthétique injectée.

8. Raccord pour conduits tubulaires selon l'une des revendications 1 à 7, dans lequel l'extrémité (2) du conduit tubulaire fait partie d'un boîtier de raccordement (4) d'un dispositif de raccordement qui permet d'établir un raccordement à un conduit (5) de milieux fluides, le conduit tubulaire (3) en matière synthétique étant raccordé au boîtier de raccordement (4) pour former une tubulure de dérivation.
